# EUROPEAN PATENT APPLICATION

(11) **EP 1 607 488 A1**
(43) Date of publication of application: **21.12.2005**
(21) Application number: 04719656.3
(22) Date of filing: 11.03.2004
(51) Int. Cl.: C22B 11/02, C22B 5/10, B01J 38/00, C01G 55/00, C22B 9/10

(54) **METHOD FOR RECOVERING PLATINUM GROUP ELEMENT**

(30) Priority: 14.03.2003 JP 2003069659; 14.03.2003 JP 2003069697
(71) Applicant: Dowa Mining Co., Ltd., Tokyo 100-8282 (JP); Tanaka Kikinzoku Kogyo K.K., Tokyo 103-0025 (JP); KOSAKA SMELTING & REFINING CO.,LTD, Chiyoda-ku, Tokyo 100-8282 (JP); Nippon Pgm Co., Ltd., Chiyoda-ku, Tokyo 100-8282 (JP)
(72) Inventor: YAMADA, Koji, Chiyoda-ku, Tokyo 100-8282 (JP); TAYAMA, Kenichi, Chiyoda-ku, Tokyo 100-8282 (JP); EZAWA, Nobuyasu, Tanaka Kikinzoku Kogyo K.K., Chuo-ku, Tokyo 103-0025 (JP); INOUE, H., Kosaka Smelting & Refining Co., Ltd., Chiyoda-ku, Tokyo 100-8282 (JP); OGINO, Masahiko, Chiyoda-ku, Tokyo 100-8282 (JP); TAKADATE, Kazuma, Chiyoda-ku, Tokyo 100-8282 (JP)
(74) Representative: Wagner, Karl H.
(86) International application number: PCT/JP2004/003237
(87) International publication number: WO 2004/081243

(57) **Abstract**

A method for recovering platinum group elements uses a closed electric furnace equipped with at least one electrode for passing electric current through and heating material charged into the furnace and a roof for substantially shielding material charged into the furnace from the exterior atmosphere. An oxide raw material entraining platinum group elements, copper oxide, solid carbonaceous reducing agent and flux are charged into the electric furnace and the electrode is used to pass electric current through and heat the charged material to melt and reduce the material, thereby forming a layer of molten metal under a molten slag layer; and enriching platinum group elements in this molten metal. At this time, the oxide raw material, copper oxide, solid carbonaceous reducing agent and flux are all prepared as powdery or particulate materials, these powdery or particulate materials are premixed and then charged into the electric furnace, and a standing step is provided wherein the heat-melted material in the furnace is allowed to stand at a temperature of 1200 - 1500 °C for at least 5 hours, whereafter the molten metal containing platinum group elements is discharged outside the furnace.

## Description

### Technical Field

This invention relates to a method for recovering platinum group elements from a substance containing at least one platinum group element, such as spent petrochemical type catalyst, spent vehicle exhaust gas purification catalyst, and spent electronic circuit boards or lead frames

### Background Art

Conventional methods for recovering platinum group elements from spent vehicle exhaust gas purification catalysts and other platinum group element-containing substances include, for example, the method of extracting platinum group elements by using a solution of an oxidizing agent added acid such as aqua regia and the method of dissolving a carrier in sulfuric acid or the like and separating the undissolved platinum group elements. However, such wet methods have been found to be impractical owing to inferior platinum group element extraction rate and to recovery and cost problems owing to the need to use large amounts of acid for dissolving the carrier.

To replace the wet method, JPA-4-317423 teaches a dry method for recovering platinum group elements. This dry method is a revolutionary method that recovers platinum group elements at high recovery rate and low cost by absorbing platinum group elements contained in spent vehicle exhaust gas purification catalyst or the like into molten copper and concentrating the result. JPA-2000-248322 teaches a dry platinum group element recovery method that is an improvement of JPA-4-317423.

The methods of JPA-4-317423 and JPA-2000-248322 are superior to the wet method in the point of enabling recovery of platinum group elements (hereinafter sometimes abbreviated as "PGM") at high recovery rate and low cost in a short period of time and have a particularly advantageous feature in that the recovery rate of Rh in PGM is higher than by the wet method.

However, when a dry method is conducted in an electric furnace, i.e., when a PGM-containing substance (spent vehicle exhaust gas purification catalyst or the like) and copper or copper oxide is melted by heating in an electric furnace in the presence of a flux component and a reducing agent and the PGM of the substance is absorbed into the molten metallic copper, the following problem emerges. Specifically, during the absorption of the PGM into the molten metallic copper, some amount of PGM is also entrained by the electric furnace slag layer present as the upper layer, so that when the electric furnace slag is discharged, PGM also flows out of the system as a result. This lowers the PGM recovery rate.

On the other hand, when a dry method is conducted in an electric furnace, the furnace rises to a high temperature that makes it necessary to protect the furnace body with heat-shielding means or cooling means. Furnace body protection methods of this type include lining the inner wall of the furnace with a refractory material and cooling the furnace body by blowing air onto the outer wall of the furnace, and installing a water-cooling jacket or an oil-cooling jacket. However, the inner wall refractory at the height level where the molten slag is present and/or at higher levels than this sustains severe damage, and when the damage becomes excessive, the operation has to be discontinued to carry out repair work. In a refining furnace that uses a carbonaceous reducing agent to obtain a metal melt by reducing an oxide raw material charged into the furnace, the refractory inside the furnace is particularly susceptible to damage and restoring it requires a large amount of expenditure.

### Disclosure of the Invention

The present invention was therefore accomplished with the object of overcoming the aforesaid problems by providing a method and equipment for recovering PGM by the dry method from PGM-containing substances with good operability at high yield.

As a method for recovering platinum group elements for achieving this object the present invention provides a method for recovering platinum group elements comprising:
charging an oxide raw material entraining platinum group elements, copper oxide, solid carbonaceous reducing agent and flux into a closed electric furnace equipped with electrodes for passing electric current through and heating material charged in the furnace and a roof for substantially shielding material charged in the furnace from the exterior atmosphere,
melting and reducing the charged material by the electric current heating with the electrode, thereby forming a layer of molten metal under a molten slag layer and enriching platinum group elements in this molten metal,
which method is characterized in that:
   the oxide raw material, copper oxide, solid carbonaceous reducing agent and flux are all prepared as powdery or particulate materials;
   these powdery or particulate materials are premixed and then charged into the electric furnace; and
   the molten metal enriched in platinum group elements is discharged outside the furnace after undergoing a standing step in which the heat-melted material in the furnace is allowed to stand at a temperature of 1200 -1500 °C for at least 5 hours.

Here the slag oxides formed in the furnace are preferably controlled to the content ranges of: Al₂O₃ : 20 - 40 wt%, SiO₂ : 25 - 40 wt%, CaO : 20 - 35 wt%, and FeO : 0 - 35 wt%. Moreover, at this time, the content ranges of the slag oxides are preferably controlled by the steps of: analyzing and ascertaining beforehand the amount of at least one among the oxides, preferably all of the oxides, of Al, Si and Fe contained in the oxide raw material entraining platinum group elements, and regulating the composition of the flux components before charging them into the furnace in accordance with the contents of these oxides. The molten metal obtained by implementing this method can, after being discharged from the furnace, be transferred to and oxidized in another furnace and separated by difference in specific gravity into an oxide layer composed mainly of copper oxide and molten metal composed mainly of metallic copper in which platinum group elements are enriched. The separated oxide layer composed mainly of copper oxide can be reused as the aforesaid copper oxide raw material charged into the electric furnace.

In accordance with the present invention there is further provided a method for recovering platinum group elements comprising:
charging an oxide raw material entraining platinum group elements, copper oxide, solid carbonaceous reducing agent and flux into a closed electric furnace equipped with electrodes for passing electric current through and heating material charged into the furnace and a roof for substantially shielding material charged into the furnace from the exterior atmosphere,
melting and reducing the charged material by the electric current heating with the electrode, thereby forming a layer of molten metal under a molten slag layer and enriching platinum group elements in this molten metal,
which method is characterized in that:
   as the electric furnace there is used an electric furnace whose wall enclosing up to a height level of the molten slag layer generated in the furnace is constituted of an iron shell and a sheet of flowing water is formed on the outside of the iron shell to descend in contact with its outer surface.

The sheet of flowing water descending in contact with the outer surface of the iron shell can be formed by evenly distributing water of a prescribed water head pressure from a header installed outward of an upper part of the furnace wall toward the whole outer periphery of the iron shell at the same height level.

### Brief Description of the Drawings

Figure 1 is schematic sectional view of an essential portion of an electric furnace in accordance with the present invention.
Figure 2 is a schematic perspective view of a portion of the wall of an electric furnace in accordance with the present invention.
Figure 3 is a system diagram of electric furnace cooling water processing system in accordance with the present invention.

### Preferred Embodiments of the Invention

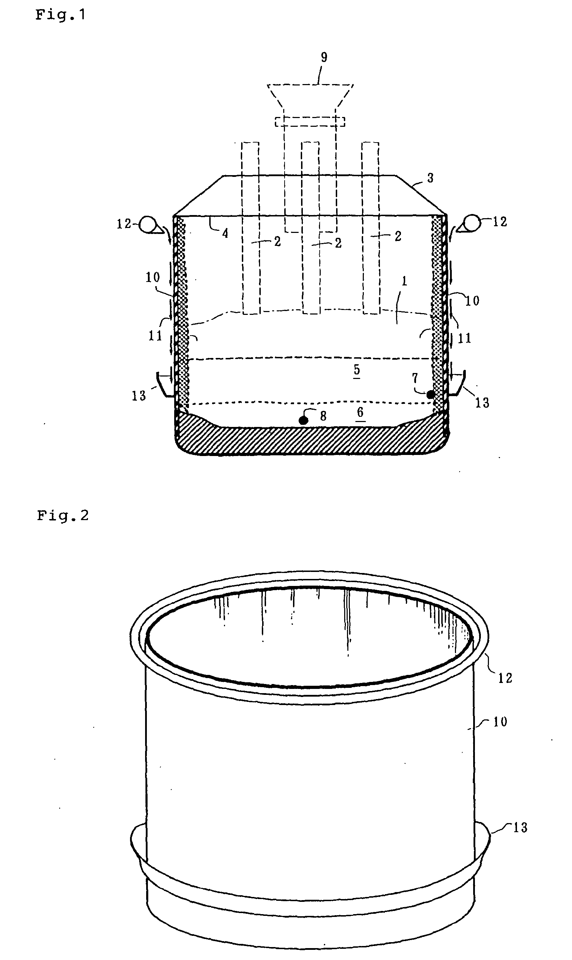

Figure 1 shows an example of an electric furnace suitable for implementing the present invention. The electric furnace of Figure 1 is a closed electric furnace equipped with electrodes 2 for passing electric current through and heating charged material 1 in the furnace, and a roof 3 provided on a furnace body 4 for substantially shielding the charged material 1 from the exterior atmosphere. The charged material 1 is composed of a mixture of oxide raw material, carbonaceous reducing agent and flux. The charged material 1 is melted by electric current passing through it from the electrodes 2 to form a molten slag layer 5, while molten metal 6 generated by reducing the oxides simultaneously pools below the molten slag layer 5. The generated molten slag layer 5 and molten metal 6 are suitably discharged outside the furnace through a slag tapping hole 7 and metal tapping hole 8. Although not illustrated, gas generated inside the furnace is discharged to outside the furnace through an exhaust gas passage. Symbol 9 in Figure 1 indicates a material loading chute.

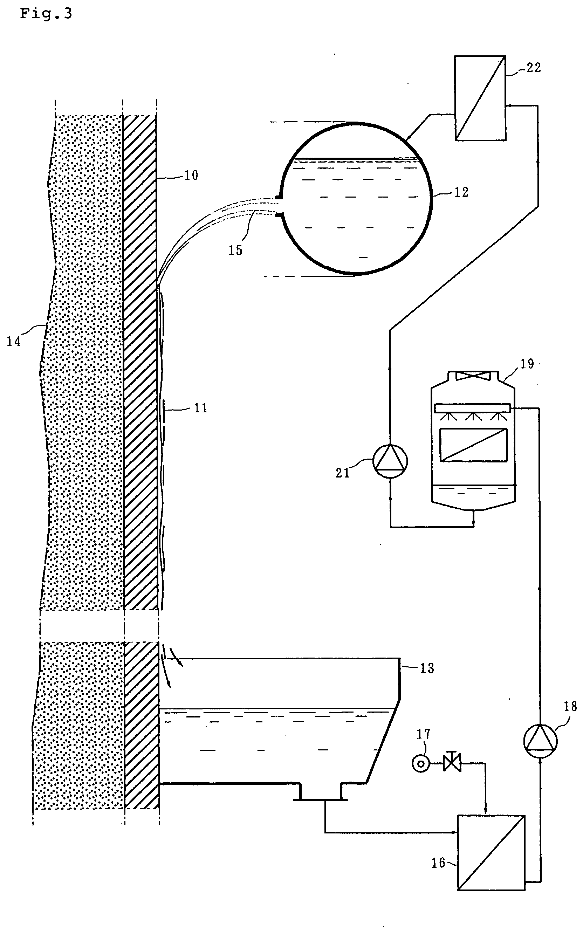

In the present invention, the wall of the electric furnace enclosing up to the height level of the molten slag layer generated in the furnace is constituted of a iron shell 10 and a sheet of flowing water 11 is formed on the outside of the iron shell 10 to descend in contact with its outer surface. In the illustrated example, the wall of the furnace body 4 (the part of the furnace other than the bottom and the roof 3) is constituted throughout by the iron shell 10. In other words, the furnace wall is formed by the iron shell 10 not only up to the height level where the molten slag layer 5 is present but also from thereon up to the region where the wall contacts the roof 3. Figure 2 illustrates this state diagrammatically.

In Figure 2, the entire furnace wall is formed of the cylindrical iron shell 10. When the furnace wall is formed of the iron shell 10 in this manner, an annular header 12 is installed outward of an upper part of the iron shell 10 to encircle the iron shell 10 at a certain spacing therefrom. Similarly, an annular trough 13 is installed on the outside of the lower part of the iron shell 10 to encircle and make contact with the iron shell 10. Water is evenly sprayed from the annular header 12 toward the whole outer peripheral surface of the iron shell 10, thereby forming a curtain like sheet of flowing water that descends along the outer surface of the iron shell 10 to be received in the annular trough 13.

This continuous sheet of flowing water 11 (Figure 1) formed on the outer surface of the iron shell 10 continuously cools the inner surface of the iron shell 10 so that molten slag generated inside the furnace forms a self-coating 14 of a regular thickness. The self-coating 14 not only is formed at the level where the molten slag layer 5 is present inside the furnace but may also be similarly formed on the inner surface thereabove. Therefore, even if no furnace wall lining is installed at the time of furnace construction, the function of a lining is produced up to the level of the molten slag layer 5 chiefly by the formation of the self-coating 14 composed of solidified slag formed on the inner surface of the iron shell 10. If a portion of the self-coating 14 should be damaged in the course of operation, the damaged portion is automatically restored in the course of operation, so that, differently from in the case of a refractory lining, a need to carry out repair work on damaged portions seldom arises.

Figure 3 diagrammatically shows the cooling water system for forming the continuous sheet of flowing water 11 on the outer surface of the iron shell 10. As shown in Figure 3, the header 12 is installed around the iron shell 10 with its axis oriented horizontally and its side facing the iron shell 10 is formed with a slit-like nozzle opening 15. The annular header 12 is supplied with cooling water of a prescribed water head pressure so that cooling water flows out from the slit-like nozzle opening 15 horizontally in a sheet-like manner toward the iron shell 10 to form a steady annular flow that falls along a parabolic trajectory. The distance between the iron shell 10 and the slit-like nozzle opening 15, the size of the nozzle opening, the pressure in the header, the quantity of supplied water and the like are determined so that this steady annular flow makes contact with the cylindrical surface of the iron shell 10, namely, so that the annular flow spreads out naturally to cover the shell 10 completely, without splashing off the surface of the iron shell 10 and without separating from the iron shell 10 during its descent after reaching the iron shell 10 or forming branching or converging flows. For this purpose, the temperature, quantity and pressure of the cooling water are controlled as explained in the following.

The sheet of flowing water 11 that flows downward along the outer surface of the iron shell 10 to be received in the annular trough 13 is first pooled in a storage reservoir 16. The reservoir 16 is supplied with makeup water from a makeup water conduit 17 in an amount equal to the evaporation loss. The hot water in the reservoir 16 is pumped to a sprinkler 20 of a cooling tower 19 by a pump 18. The hot water is cooled by heat exchange with external air at the cooling tower 19. The cooled water is pumped up to a water head tank 22 by a metering pump 21 and then supplied into the annular header 12. At this time, the amount of water sent from the water head tank 22 into the annular header 12 is controlled so as to keep the water level in the annular header 12 level. Since constant pressure cooling water discharges from the slit-like nozzle opening 15, the continuous sheet of flowing water 11 is steadily formed on the surface of the iron shell 10. Owing to the steady formation of the sheet of flowing water 11, the self-coating 14 is maintained on the inside of the iron shell 10 at a constant thickness.

The method for recovering platinum group elements from used and discarded catalyst and the like will now be explained. The electric furnace explained in the foregoing can be used to implement the recovery method.

The "platinum group element-containing substance to be processed" as termed with respect to the present invention is, for example, typically a spent and discarded petrochemical type catalyst containing platinum, palladium and the like or a spent and discarded vehicle exhaust gas purification catalyst containing platinum, palladium and optionally rhodium and the like, but also includes rejected products, scrap and the like occurring in the process of manufacturing such catalysts, as well as used electronic circuit boards, dental products, lead frames and the like that contain palladium and the like. Such substances for processing that contain at least one platinum group element are ordinarily in a form of having a small amount of platinum group elements carried on a metal oxide or ceramic.

The present invention is basically constituted of the steps of charging into a refining furnace and melting so-defined substances for processing that contain at least one platinum group element, together with a copper source material containing copper oxide, a flux and a carbonaceous reducing agent, sinking a molten metal layer of primarily metallic copper below a formed molten slag layer of primarily oxides, and enriching the platinum group elements in the molten metal sunk below. At this time, the present invention adopts some distinctive features as follows:
1. A substance for processing that contains at least one platinum group element, a copper source material containing copper oxide, a solid carbonaceous reducing agent and flux are all made ready in the form of powdery or particulate materials, the powdery or particulate materials are premixed, and the premixed powdery or particulate material is charged into the electric furnace.
2. The charged material is heated and melted, whereafter a standing step is conducted. The standing step is constituted of making the heat-melted material stand at a temperature of 1200-1500 °C for at least 5 hours. After the standing step, the molten metal enriched in platinum group elements is discharged outside the furnace.
3. The blending ratio of the raw materials is regulated so that the slag oxides formed in the furnace fall in the content ranges of: Al₂O₃ : 20 - 40 wt%, SiO₂ : 25 - 40 wt%, CaO : 20 - 35 wt%, and FeO : 0 - 35 wt%,
4. The composition of the oxide raw material is controlled by the steps of : analyzing and ascertaining beforehand the amount of at least one among the oxides, preferably all of the oxides, of Al, Si and Fe contained in the oxide raw material entraining platinum group elements, and regulating the composition of the flux components before charging them into the furnace in accordance with the contents of aforesaid oxides.
5. The composition of the slag separated from the molten metal is regulated to:
   Al : 10 - 22 wt%
   Si: 10-16 wt%
   Ca : 14 - 22 wt%
   Fe : 27 wt% or less (including 0%)
   Pt : 10 ppm or less, and
   the balance substantially of oxygen.
6. As the electric furnace for this method there is used an electric furnace wherein the furnace wall is constituted of a iron shell, a continuous sheet of flowing water is formed on the outer surface of the iron shell, and molten slag forms a solidified self-coating layer on the inner surface of the iron shell.

These features will now be explained in further detail.

The substance for processing containing platinum group elements (PGM-containing substance) is mixed with flux components (e.g., silica, calcium oxide, calcium carbonate or the like), a carbonaceous reducing agent (e.g., coke powder) and a copper source material (copper or copper oxide) at appropriate ratios and the mixture is charged into the electric furnace. The ratio of the flux components, while differing with the composition of the PGM-containing substance, is preferably determined so that the vitreous oxides after heating and melting (the electric furnace slag) has a composition of: Al₂O₃ : 20 - 40 wt%, SiO₂ : 25 - 40 wt% and CaO : 20 - 35 wt%. The slag oxide generated in the furnace is in the end determined by the PGM-containing substance and flux components charged into the furnace. The carbonaceous reducing agent does not remain in the slag as an oxide and substantially all of the copper oxide charged as the copper source material is reduced to metallic copper.

The ranges of the constituents of the slag oxide generated in the furnace can therefore basically be determined by regulating the blending ratio of the PGM-containing substance and the flux components. However, a precondition for this is that the meltdown, reduction reaction, slag-hmetal phase separation and the like proceed in good order. It was discovered that this precondition can be satisfied by, as set out in feature 1 above, preparing the all of the materials to be charged into the furnace in the form of powdery or particulate materials, premixing the powdery or particulate materials, and charging the mixture into the electric furnace. More specifically, the particle diameter of the metallic copper or copper oxide charged into the furnace is preferably 0.1 mm or greater to less than 10 mm, and that of 50 wt % of the PGM-containing substance is preferably less than 10 mm. These two components are uniformly mixed with powdery flux and powdery carbonaceous reducing agent and the resulting mixture is charged into the furnace.

The reducing agent is used chiefly for the purpose of reducing the copper oxide to metallic copper. The reducing agent used is typically coke. However, it is instead possible to use a base metal containing a noble metal or PGM, in which the noble metal or PGM in the base metal can be simultaneously recovered. Resin, activated carbon and the like can also be used as the reducing agent. The copper source material is used as a medium for dissolving and incorporating PGM. It can be metallic copper per se, but copper oxide is also usable.

When the electric furnace is operated using these charged raw materials, the charged raw materials are first heated and melted (meltdown). The meltdown temperature is 1200 °C - 1700 °C, preferably 1300 °C - 1550 °C. At below 1200 °C, the slag does not completely melt, so that it becomes high in viscosity and the PGM recovery rate decreases. However, a temperature exceeding 1700 °C is undesirable from the viewpoint of energy consumption, of course, but also because it may cause damage to the body of the furnace. Owing to the meltdown, the PGM carrier material (alumina and other oxides) that accounts for almost all of the PGM-containing substance becomes vitreous molten slag that floats, while the copper oxide is reduced by the coke or the like to become metallic copper that, owing to the difference in specific gravity, sinks through the slag to form a molten metallic copper layer (molten metal).

After charging of all materials into the furnace has been completed, a sealed internal atmosphere is established in the furnace and the charged material is heated and melted by passage of electric current. As set out in feature 2 above, after the heating and melting, a standing step is preferably provided for maintaining a temperature of 1200 - 1500 °C for at least 5 hours. The step of standing for at least 5 hours or longer is established between meltdown and molten metal discharge. When the raw material charged into the furnace is prepared as a mixture of powdery and particulate materials and the standing step is established, the molten metal in the electric furnace, which consists almost entirely of metallic copper, can capture PGM at a high recovery rate.

When the temperature of the standing step is below 1200 °C, the PGM recovery rate is insufficient regardless of how long the standing period is prolonged. On the other hand, increasing the temperature above 1500 °C causes damage to the furnace without producing any improvement in the PGM recovery rate. Almost all PGM can be recovered over a standing period of at least 5 hours at a temperature in the range of 1200 - 1500 °C. When the standing period is prolonged beyond a certain point, the tendency for the recovery rate to improve reaches saturation. This makes it economically advantageous to complete the standing step after a standing period of, say, around 5 to 10 hours.

PGM is absorbed by the metallic copper as the metallic copper sinks through the slag. The recovery rate of the PGM into the metallic copper at this time varies with the material temperature after meltdown and the standing period. It also varies with the particle diameter of the metallic copper or copper oxide loaded in the furnace, the particle diameter of the PGM-containing substance loaded in the furnace, and the like. As pointed out above, it is therefore essential to implement appropriate control.

Thus, in the present invention, the standing step is appropriately controlled and the raw materials to be charged into furnace are charged after being made particulate and mixed, whereby the molten metal in the electric furnace, which consists almost entirely of metallic copper, can capture PGM at a high recovery rate. Although the reason for this is not altogether clear, it is reasonable to conclude as follows.

At the time point when the carrier material (alumina and other oxides) that accounts for almost all of the PGM-containing substance comes to be melted together with the flux components it disperses as a slag of suitable viscosity. Then, the charged metallic copper or the metallic copper reduced from copper oxide by the reducing agent disperses into the slag. This dispersion is particularly good when the metallic copper or copper oxide is incorporated into the mixture as particulate matter. The metallic copper dispersed in the slag absorbs the PGM dispersed and floating in the slag as its sinks toward the metallic copper of the lower layer under its own weight. Although this process starts from meltdown, in the case where the temperature is too low (e.g., under 1200 °C) during the ensuing standing, the viscosity of the slag rises to the point that the momentum of both the PGM and the metallic copper present therein becomes low, so that both stay in the floating state. On the other hand, when the temperature during standing is too high (e.g., above 1500 °C), more than the required amount of heating energy is consumed, which is uneconomical.

Viewed in this manner, it can be seen that in the standing step it is important for the molten metallic copper to be present in slag of an appropriate viscosity in which PGM is dispersed throughout, to be in an appropriate dispersed state in the slag, and to sink slowly through the slag with an appropriate momentum. For achieving a good dispersed state, the charged raw materials must be mixed after being made particulate, while for achieving appropriate viscosity it is important to regulate the amount added and the composition of the flux components, and also to control the temperature. The standing needs to be continued for a period of time sufficient for substantially all of the molten metallic copper to sink through the slag. Once reduction of copper oxide proceeds no further and the sinking of the molten metallic copper is completed, no more PGM is taken into the lower layer of molten metal. By achieving this condition, the method of the present invention is able to absorb PGM into the molten metal at a high recovery rate.

On completion of the standing step, most of the slag is discharged but some is left in the furnace. Operating time can be shortened if desired by setting up two electric furnaces side by side and staggering their operation so that when one is in the standing state, charging and melting of the materials is being carried out in the other. It is also possible to transfer the heated and melted material in the furnace to a separate standing furnace and carry out the standing step in it.

As set out in feature 3 above, the blending ratio of the raw materials is preferably regulated so that the slag oxides formed in the furnace fall in the content ranges of: Al₂O₃ : 20 - 40 wt%, SiO₂ : 25 - 40 wt%, CaO : 20 - 35 wt%, and FeO : 0 - 35 wt%. For this, as set out in feature 4 above, it is possible to control the composition of the oxide raw materials by the steps of : analyzing and ascertaining beforehand the amount of at least one among the oxides of Al, Si and Fe contained in the PGM-containing substance, and regulating the composition of the flux components before charging them into the furnace in accordance with the ascertained contents of said oxides ascertained by the analysis.

More specifically, the PGM-containing substance is crushed into particulate matter of a particle size of 5 mm or less before being charged into the furnace and a sample for analysis is taken from this crushed and mixed raw material to be processed. By regulating the composition of flux components (at least one member selected from the group consisting of Al₂O₃, SiO₂, CaO and FeO) based on the result of the analysis, the slag oxides formed in the furnace are regulated to fall in the content ranges of: Al₂O₃ : 20 - 40 wt%, SiO₂ : 25 - 40 wt%, CaO : 20 - 35 wt%, and FeO : 0 - 35 wt%.

As a result, the composition of the slag separated from the molten metal is, as set out in feature 5 above, regulated to a composition of Al : 10 - 22 wt%, Si : 10 - 16 wt%, Ca : 14 - 22 wt%, Fe : 27 wt% or less (including 0%), Pt : 10 ppm or less, and the balance substantially of oxygen.

When the slag oxides fall in the aforesaid content ranges of: Al₂O₃ : 20 - 40 wt%, SiO₂ : 25 - 40 wt%, CaO : 20 - 35 wt%, and FeO : 0 - 35 wt%, there is obtained a slag that has an appropriate viscosity and readily disperses and flows, so that in the course of separation owing to difference in specific gravity, the platinum group elements that were present in the raw material to be processed are easily absorbed into the molten metallic copper. As a result, the final slag at the end of the processing comes to have the foregoing composition of: Al: 10 - 22 wt%, Si : 10 - 16 wt%, Ca : 14 - 22 wt%, Fe : 27 wt% or less (including 0%), Pt : 10 ppm or less, and the balance substantially of oxygen.

When the slag generated in the electric furnace deviates from the aforesaid controlled ranges, e.g., when the Al₂O₃ content exceeds 40 wt%, the viscosity of the slag shoots up, and this is believed to be why the rate of contact between the platinum group elements and molten metallic copper reduced from the copper oxide slows to make it easy for molten metallic copper incorporating the platinum group elements to stay afloat in the slag, thus lowering the rate of absorption of the platinum group elements into the molten metal. The preferred range of Al₂O₃ content is 20 - 30 wt%.

As set out in feature 6 above, the processes of features 1 - 5 can all be conducted using an electric furnace having a wall structure formed with the sheet of flowing water and the self-coating layer explained with reference to Figures 1 - 3. Use of this electric furnace enables recovery of platinum group elements at high yield with good operability.

Following the standing step in the electric furnace operation, most of the upper layer of slag is discharged and discarded but some is left in the furnace. Next the molten metal into which platinum group elements were absorbed is tapped from the electric furnace and transferred to a furnace for oxidizing molten metal (oxidizing furnace) while still in the molten state, whereafter the platinum group elements are enriched. For this, the melt is oxidized using oxygen gas or an oxygen-containing gas in an oxidizing furnace separate from the electric furnace, thereby separating it by difference in specific gravity into an oxide layer composed primarily of copper oxide and molten metal composed primarily of metallic copper enriched in platinum group elements. The oxidation is conducted by introducing oxygen gas or an oxygen-containing gas while maintaining a material temperature of 1100 °C - 1600 °C, preferably 1200 °C - 1500 °C. At a temperature below 1100 °C, the oxidation rate is low, and at a temperature above 1600 °C, the furnace body is damaged. Following the oxidation, the upper oxide layer is drained off and separated by tilting the furnace. Next, the lower molten metal enriched in platinum group elements is poured out of the furnace and sent to the next recovery process.

Following completion of the oxidation, the ordinary practice after draining off the upper oxide layer is to make up for the amount of the decrease with fresh molten metal containing absorbed platinum group elements from the electric furnace, thereby forming a combined melt with the molten metal remaining in the furnace, and then repeat the oxidation. Preferably, the molten metal is not drained from the oxidizing furnace and sent to the next process, i.e., the platinum group element harvesting process, until the platinum group element content of the lower molten metal has reached 10 % to 75 % owing to the repeated oxidation.

Since the oxide layer drained from the oxidizing furnace is composed almost entirely of copper oxide, it can be reused as the copper source material supplied to the electric furnace after being drained off and solidified by cooling. This also enables recovery of platinum group elements entrained by the oxide layer. The oxides can be water-granulated by rapid water cooling from the molten state, namely, can be obtained as particulate matter of a particle diameter of 0.1 mm to 10 mm, which is ideal as a raw material for charging into the electric furnace.

### Examples

### Example 1

Spent vehicle exhaust gas purification catalyst containing on average about 1200 ppm of Pt, about 300 ppm of Pd and about 90 ppm of Rh (containing on average about 38.5 wt% of Al₂O₃, about 39.6 wt% of SiO₂, and about 12.5 wt% of MgO) was granulated to a particle diameter of not greater than 10 mm. With 1000 kg of the granulated spent catalyst was mixed 500 kg of CaO and 100 kg of SiO₂ as flux component, 30 kg of coke as reducing agent, and 300 kg of copper oxide (about 80 % of which was particulate matter of a particle diameter of 0.1 mm to 10 mm). The mixture was charged into an electric furnace.

The charged material was melted in the electric furnace by heating to about 1500 °C. After meltdown, it was left to stand under continued application of electric current to hold it at a material temperature of about 1400 °C. Once every hour, part of the upper layer of slag was drained from the side of electric furnace and solidified by cooling. This operation was continued for 20 hours after meltdown. The PGM in the slag sampled hourly was analyzed. The results are shown in Table 1.

From the results in Table 1 it can be seen that at this holding temperature considerable amounts of Pt, Pd and Rh remained in the slag when the standing period was within 5 hours, but that the amounts became very low when the standing period exceeded 5 hours, with the tendency to decrease substantially stopping at around 8 hours.

### Example 2

Example 1 was repeated except that the holding temperature was set at 1200 °C and the standing period at 5 hours. The PGM in the slag was analyzed as in Example 1. As shown in Table 1, the results were Pt : 0.9 ppm, Pd : 0.2 ppm and Rh: 0.1 ppm.

### Example 3

Example 1 was repeated except that the holding temperature was set at 1300 °C and the standing period at 5 hours. The PGM in the slag was analyzed as in Example 1. As shown in Table 1, the results were Pt : 0.7 ppm, Pd : 0.1 ppm and Rh : 0.1 ppm.

### Comparative Example 1

Example 1 was repeated except that the holding temperature was set at 1100 °C and the standing period at 5 hours. The PGM in the slag was analyzed as in Example 1. As shown in Table 1, the results were Pt : 2.5 ppm, Pd : 0.9 ppm and Rh : 0.2 ppm. At a holding temperature under 1200 °C, the PGM could not migrate sufficiently from the slag to the metal.

### Comparative Example 2

Example 1 was repeated except that the holding temperature was set at 1550 °C and the standing period at 5 hours. The PGM in the slag was analyzed as in Example 1. As shown in Table 1, the results were Pt : 1.5 ppm, Pd : 0.4 ppm and Rh : 0.1 ppm. At a holding temperature above 1500 °C, the PGM could not migrate sufficiently from the slag to the metal.

**Table 1**

| Standing period (hr) | Standing temp. (°C) | Amount of PGM Loss into slag | | | Remark |
|---|---|---|---|---|---|
| | | Pt | Pd | Rh | |
| 0 | 1400 | 9.7 | 2.5 | 1.0 | Example 1 |
| 1 | 1400 | 5.2 | 1.5. | 0.3 | |
| 2 | 1400 | 3.8 | 1.2 | 0.3 | |
| 3 | 1400 | 2.5 | 1.0 | 0.2 | |
| 4 | 1400 | 1.9 | 0.6 | 0.2 | |
| 5 | 1400 | 0.9 | 0.2 | <0.1 | |
| 6 | 1400 | 0.8 | 0.2 | <0.1 | |
| 8 | 1400 | 0.8 | 0.1 | <0.1 | |
| 10 | 1400 | 0.7 | 0.1 | <0.1 | |
| 20 | 1400 | 0.6 | <0.1 | <0.1 | |
| 5 | 1100 | 2.5 | 0.9 | 0.2 | Comparative Example 1 |
| 5 | 1200 | 0.9 | 0.2 | <0.1 | Example 2 |
| 5 | 1300 | 0.7 | 0.1 | <0.1 | Example 3 |
| 5 | 1550 | 1.5 | 0.4 | 0.1 | Comparative Example 2 |

### Example 4

The molten metal in the electric furnace after conducting an operation of 8 hours of standing at 1400 °C in accordance with Example 1 was tapped from the electric furnace and led into a heated oxidizing furnace. Oxygen-enriched air of an oxygen concentration of 40 % was blown onto the surface of the molten metal in the oxidizing furnace until an approximately 1-cm thick oxidized layer had formed on the surface of the melt. At this point, the furnace was tilted to discharge the layer of oxide from the furnace into a water tank through which a large quantity of water was being passed. The furnace was returned to its original orientation and the operation of blowing oxygen-enriched air onto the melt surface to form an oxidized layer and then discharging the layer into the water tank when it had reached a thickness of approximately 1 cm was repeated. This rapid cooling in the water formed water-crushed particles of a particle diameter of 10 mm or less. The result could be used as part of the copper oxide component of the raw material charged into the electric furnace.

To the molten metal remaining in the oxidizing furnace after discharge of the oxide layer was added with molten metal obtained by processing corresponding to that on the electric furnace side in Example 2 and oxygen-enriched air was similarly blown onto the resulting surface. The operation of discharging the oxide layer from the oxidizing furnace when it had reached a thickness of approximately 1 cm was repeated twice. All of the melt remaining after this operation was then discharged from the oxidizing furnace and solidified by water cooling. About 10.5 kg of metallic copper was obtained. The PGM content of this metallic copper was : Pt : about 22 wt%, Pd : about 5.5 wt%, Rh : about 1.5 wt%.

### Example 5

Spent honeycomb-shaped automotive exhaust gas purification catalyst, 1000 kg, was loaded on a conveyor and supplied to a jaw crusher at the first stage and a double-roll crusher at the second stage, thereby crushing the whole amount to a particle diameter of 5 mm or less. The whole amount of the crushed raw material to be processed was passed through two three-stage rifflers (at a reduction of 1/2 x 1/2 x 1/2 = 1/8 in each riffler) and 15.5 kg of a 1/64 riffled representative sample was taken. The remaining bulk was stored in a silo. The whole amount of the representative sample was dried and measured for water content (= 0.5 wt%). Next, the whole amount was pulverized to under 100 mesh in a pulverizer and mixed in a V-blender, whereafter an analysis sample, 100g, was colledted using a rotary 1/12 riffler.

The oxides of the analysis sample were analyzed using a fluorescent X-ray analyzer and were found to consist of Al₂O₃ : 40.5 wt%, SiO₂ : 41.6 wt%, MgO : 11.5 wt%, and FeO : 1.5 wt%.

The desired makeup of the slag generated in the electric furnace was defined as: Al₂O₃ : 22.3 wt%, SiO₂ : 28.5 wt%, CaO : 28.1 wt% and FeO : 12.1 wt%. With the aim of using the aforesaid analysis values as the basis for achieving this desired makeup, there was weighed out 984.5 kg of the bulk stored in the silo and, as flux components, 500 kg of CaO, 100 kg of SiO₂ and 200 kg of FeO. In addition, 30 kg of coke as reducing agent and 300 kg of copper oxide as copper source material (about 80 % of which was particulate matter of a particle diameter of 0.1 mm to 10 mm) were weighed out and the total amounts of the four types of material were mixed.

The mixture was charged into an electric furnace and melted at a temperature of about 1350 °C. After meltdown, the melt was left to stand for about 5 hours at a temperature of 1250 to 1300 °C. The upper layer of slag oxides was then discharged from the side of the electric furnace and solidified by cooling. Analysis of the platinum group elements in the slag showed it to contain: Pt = 0.7 ppm, Pd = 0.1 ppm and Rh = 0.1 ppm, i.e., loss of platinum group elements into the slag was very slight.

Analysis of the slag oxide components showed it to contain: Al₂O₃: 21.5 wt%, SiO₂ : 29.2 wt%, CaO : 27.9 wt% and FeO : 11.8 wt%. All of these values are within ±1.0 wt% of the aforesaid desired makeup values.

### Reference Example 1

From 1000 kg of large and small broken chunks of spent honeycomb-shaped automotive exhaust gas purification catalyst (converter pieces) contained in two flexible containers, 15 kg was randomly selected as a representative sample. The whole amount of the representative sample was dried, measured for water content (= 0.8 wt%), and crushed in a jaw crusher. The whole amount of the crushed material was pulverized to under 100 mesh in a pulverizer and mixed in a V-blender, whereafter an analysis sample, 100 g, was colledted using rotary 1/12 riffler.

The oxides of the analysis sample were analyzed using a fluorescent X-ray analyzer and were found to consist of Al₂O₃ : 37.8 wt%, SiO₂ : 43.1 wt%, MgO : 12.3 wt%, and FeO : 1.2 wt%.

The desired makeup of the slag generated in the electric furnace was defined as: Al₂O₃ : 22.0 wt%, SiO₂ : 25.1 wt%, CaO : 29.1 wt% and FeO : 12.6 wt%. With the aim of using the aforesaid analysis values as the basis for achieving this desired makeup, there was weighed out 985 kg of the chunks of spent honeycomb-shaped automotive exhaust gas purification catalyst (converter pieces) and, as flux components, 500 kg of CaO and 200 kg of FeO. In addition, 30 kg of coke as reducing agent and 300 kg of copper oxide as copper source material (about 80 % of which was particulate matter of a particle diameter of 0.1 mm to 10 mm) were weight out. The materials were charged into an electric furnace and melted at 1350 °C.

The charged material was melted in the electric furnace at about 1350 °C. After meltdown, the melt was left to stand for about 5 hours at a temperature of 1250 to 1300 °C. The upper layer of slag oxides was then discharged from the side of the electric furnace and solidified by cooling. Analysis of the platinum group elements in the slag showed it to contain: Pt = 1.8 ppm, Pd = 0.4 ppm and Rh = 0.2 ppm, i.e., loss of platinum group elements into the slag was greater than in Example 5.

Analysis of the slag oxide components showed it to contain: Al₂O₃ : 23.5 wt%, SiO₂ : 22.1 wt%, CaO : 29.5 wt% and FeO : 11.8 wt%. The content values for Al₂O₃ and SiO₂ are more than 1.5 % higher than the aforesaid desired makeup values.

### Example 6

The molten metal containing platinum group elements in the electric furnace after conducting an operation according to Example 1 was tapped from the lower part of the electric furnace and led to a heated oxidizing furnace. Oxygen-enriched air of an oxygen concentration of 40 % was blown onto the surface of the molten metal in the oxidizing furnace until an approximately 1-cm thick oxidized layer had formed on the surface of the melt. At this point, the furnace was tilted to discharge the layer of oxide from the furnace into a water tank through which a large quantity of water was being passed.

The operation of blowing oxygen-enriched air onto the surface of the molten metal in the oxidizing furnace to form an oxidized layer and then discharging the layer into the water tank when it had reached a thickness of approximately 1 cm was repeated. After five repetitions of this operation, the molten metal containing platinum group elements in the electric furnace after conducting an operation according to Comparative Example 1 was drawn from the lower part of the electric furnace and led to a heated oxidizing furnace, thereby forming a combined melt. The operation of blowing oxygen-enriched air onto the molten metal in the furnace, discharging the generated oxides from the furnace and water-cooling them was repeated. After this processing all of the obtained molten metal was discharged from the oxidizing furnace and solidified by water cooling. Analysis of the result showed that the amount of metallic copper was 5.4 kg, and that the platinum group element contents were: Pt : 21.3 wt%, Pd : 6.7 wt% and Rh : 1.4 wt%.

## Claims

1. A method for recovering platinum group elements comprising:
charging an oxide raw material entraining platinum group elements, copper oxide, solid carbonaceous reducing agent and flux into a closed electric furnace equipped with electrodes for passing electric current through and heating material charged in the furnace and a roof for substantially shielding material charged in the furnace from the exterior atmosphere,
melting and reducing the charged material by the electric current heating with the electrode, thereby forming a layer of molten metal under a molten slag layer and enriching platinum group elements in this molten metal,
which method is **characterized in that**:
the oxide raw material, copper oxide, solid carbonaceous reducing agent and flux are all prepared as powdery or particulate materials;
these powdery or particulate materials are premixed and then charged into the electric furnace; and
the molten metal enriched in platinum group elements is discharged outside the furnace after undergoing a standing step in which the heat-melted material in the furnace is allowed to stand at a temperature of 1200 -1500 °C for at least 5 hours.

2. A method for recovering platinum group elements according to claim 1, wherein the slag oxides formed in the furnace are controlled to the content ranges of: Al₂O₃ : 20 - 40 wt%; SiO₂: 25 - 40 wt%, CaO : 20 - 35 wt%, and FeO : 0 - 35 wt%.

3. A method for recovering platinum group elements according to claim 2, wherein the content ranges of the slag oxides are controlled by the steps of : analyzing and ascertaining beforehand the amount of at least one among the oxides of Al, Si and Fe contained in the oxide raw material entraining platinum group elements, and regulating the composition of the flux components before charging them into the furnace in accordance with the contents of said oxides.

4. A method for recovering platinum group elements according to claim 3, wherein the flux contains at least one component selected from the group consisting of Al₂O₃, SiO₂, CaO and FeO.

5. A method for recovering platinum group elements according to claim 1, wherein the composition of the molten slag is regulated to:
Al : 10 - 22 wt%
Si: 10-16 wt%
Ca : 14 - 22 wt%
Fe : 27 wt% or less (including 0%)
Pt : 10 ppm or less, and
the balance substantially of oxygen.

6. A method for recovering platinum group elements according to claim 1, wherein the molten metal discharged from the furnace is transferred to and oxidized in another furnace and separated by difference in specific gravity into an oxide layer composed mainly of copper oxide and molten metal composed mainly of metallic copper in which platinum group elements are enriched.

7. A method for recovering platinum group elements according to claim 1, wherein the oxide layer composed mainly of copper oxide of claim 6 is reused as the copper oxide of claim 1.

8. A method for recovering platinum group elements comprising:
charging an oxide raw material entraining platinum group elements, copper oxide, solid carbonaceous reducing agent and flux into a closed electric furnace equipped with electrodes for passing electric current through and heating material charged into the furnace and a roof for substantially shielding material charged into the furnace from the exterior atmosphere,
melting and reducing the charged material by the electric current heating with the electrode, thereby forming a layer of molten metal under a molten slag layer and enriching platinum group elements in this molten metal,
which method is **characterized in that**:
as the electric furnace there is used an electric furnace whose wall enclosing up to a height level of the molten slag layer generated in the furnace is constituted of an iron shell and a sheet of flowing water is formed on the outside of the iron shell to descend in contact with its outer surface.

9. A method for recovering platinum group elements according to claim 8, wherein a self-coating layer consisting of a solidified layer of fused substances in the furnace is produced on the inner surface of the iron shell.

10. A method for recovering platinum group elements according to claim 8 or 9, wherein the sheet of flowing water descending in contact with the outer surface of the iron shell is formed by evenly distributing water of a prescribed water head pressure from a header installed outward of an upper part of the furnace wall toward the whole outer periphery of the iron shell at the same height level.
